# EUROPEAN PATENT APPLICATION

(11) **EP 4 083 899 A1**
(43) Date of publication of application: **02.11.2022**
(21) Application number: 20907525.8
(22) Date of filing: 23.11.2020
(51) Int. Cl.: G06Q 50/10, G06Q 50/28, G06Q 10/00, G06K 19/06

(54) **SYSTEM FOR PROVIDING SHOE MANAGEMENT SERVICE BY USING O2O-BASED DELIVERY BUSINESS PLATFORM**

(30) Priority: 24.12.2019 KR 20190174247
(71) Applicant: Kim, O sung, Seoul 06793 (KR); Kim, Jae Gyun, Seoul 05850 (KR); Kim, Jae Hee, Seoul 06793 (KR); Lim, Jeong Ja, Seoul 06793 (KR)
(72) Inventor: Kim, O sung, Seoul 06793 (KR); Kim, Jae Gyun, Seoul 05850 (KR); Kim, Jae Hee, Seoul 06793 (KR); Lim, Jeong Ja, Seoul 06793 (KR)
(74) Representative: Lermer, Christoph
(86) International application number: PCT/KR2020/016557
(87) International publication number: WO 2021/132896

(57) **Abstract**

Provided is a system for providing a shoe management service by using an O2O-based delivery business platform, the system comprising: user terminals for transmitting shoe management request events and receiving and outputting shoe collection times and shoe delivery times; at least one affiliated store terminal for setting the shoe collection times and the shoe delivery times by location or area and registering at least one employee terminal; and a shoe management service server including a receiving unit for receiving the shoe management request events from the user terminals, a selection unit for filtering for the at least one affiliated store terminal on the basis of real-time locations of the user terminals or addresses inputted therefrom, and a distribution unit for transmitting the shoe management request events to the affiliated store terminal obtained through filtering.

## Description

### [Technical Field]

The present disclosure relates to a method of providing a shoe management service by using an online-to-offline(020)-based delivery agency platform, and more particularly, to a method of connecting a customer and a business operator through a cooperative sharing economy and a subscription economy.

### [Background Art]

Sophisticated changes in the smartphone and ICT market are deeply permeated into our daily lives, changing many parts, and providing a new growth engine to the industry. In the hyper-connected, hyper-converged and super-intelligent society caused by the 4^{th} industrial revolution and smartphones, consumer demands are being directly or indirectly reflected in production in real time. Due to universal convenience of being able to receive real-time information on on/offline services, the mobile business environment is changing from a hardware competition to a service and content competition. Accordingly, an online-to-offline (O2O) service, which combines offline and online, is growing rapidly, and the appearance of the O2O service is changing lifestyles and consumption patterns.

At this time, an online system for ordering and collecting laundry has been researched and developed. In this regard, the related arts, i.e., Korean Patent No. 10-1720263 (published on March 28, 2017) and Korean Patent Application Laid-Open No. 10-2019-0013253 (published on February 11, 2019), respectively disclose a configuration of receiving a laundry order including a laundry collection date, a desired completion date, and laundry item and quantity from a user, selecting one or more candidate affiliated stores capable of processing the laundry order from among a plurality of stored affiliated stores, providing a user terminal with the selected candidate affiliated stores, and a laundry cost and an expected laundry completion date calculated for each candidate affiliated store, being informed of selection of an affiliated store from the user terminal, receiving the expected laundry completion date, address information of the user and the laundry order from a laundry management server, and transmitting the progress of collection and delivery of laundry to the user terminal through the laundry management server, and a configuration of laundry collection scheduling implemented so that a large number of people can efficiently perform a laundry collection service at the same time through POI clustering technology and optimal route search technology.

However, even though the above-described configurations are used, it is essential to secure manpower for actual collection, transmission and delivery. Due to the nature of the delivery service, staff replacement occurs frequently and it is difficult to operate the delivery service regularly, and thus the current situation is that it is not easy to even supply the manpower. In addition, in the case of small and medium-sized companies or individual businesses, when only one or two collections are made in one building, there is no investment cost, time-efficiency or margin, and therefore, only customers coming from fixed places are accepted. On the other hand, large companies have separate collection and delivery staff. Thus, it is difficult for small companies to survive because an infrastructure is relatively not established and manpower replenishment is not made on a regular basis. Accordingly, it is required to build an infrastructure that can provide a contact point between customers and business operators.

### [Technical Problem]

An object of the present disclosure is to provide a method of providing a shoe management service by using an online-to-offline(020)-based delivery agency platform, in which economies of scale may work by securing an affiliated store on the basis of application of at least one affiliated store, collection and delivery may be available at any time through partnership with at least one delivery agency as well as the affiliated store's own delivery staff so as to enable constant supply of delivery staff, collection and delivery may be efficiently made along a pre-set route rather than going back and forth between the location of each affiliated store and the location of each user, resident staff and temporary staff may be efficiently managed by requiring to use a delivery agency when distance movement between an affiliated store and a user occurs individually, and supply in response to demand may be provided through supply chain management. Technical problems to be solved by the present disclosure are not limited to those described herein, and other technical problems may be present.

### [Technical Solution]

In accordance with an embodiment of the present disclosure, there is provided a system for providing a shoe management service by using an O2O-based delivery agency platform, which includes a user terminal that transmits a shoe management request event, and receives and outputs shoe collection time and shoe delivery time, at least one affiliated store terminal that sets the shoe collection time and the shoe delivery time for each location or region, and registers at least one staff terminal, and a shoe management service providing server including a receiving unit that receives the shoe management request event from the user terminal, a selection unit that filters at least one affiliated store terminal on the basis of a real-time location or inputted address of the user terminal, and a distribution unit that transmits the shoe management request event to the filtered affiliated store terminal.

### [Advantageous Effects]

According to any one of the above-described technical solutions of the present disclosure, economies of scale can work by securing an affiliated store on the basis of application of at least one affiliated store, collection and delivery can be available at any time through partnership with at least one delivery agency as well as the affiliated store's own delivery staff so as to enable constant supply of delivery staff, collection and delivery can be efficiently made along a pre-set route rather than going back and forth between the location of each affiliated store and the location of each user, resident staff and temporary staff can be efficiently managed by requiring a delivery agency to be used when distance movement between an affiliated store and a user occurs individually, supply in response to demand can be provided through supply chain management, job creation effect can be expected from young people to the elderly, the problem of infrastructure shortage caused by the lack of similar technology can be solved, the cleanliness of shoes in which there are more bacteria than in the bathroom can be maintained by performing LED disinfection, steam disinfection and air freshener spray after shoe repair and cleaning, and differentiated customer service can be created.

### [Description of Drawings]

FIG. 1 is a diagram illustrating a system for providing a shoe management service using an O2O-based delivery agency platform, according to an embodiment of the present disclosure.
FIG. 2 is a block diagram illustrating a shoe management service providing server included in the system of FIG. 1.
FIG. 3 is a diagram illustrating an example in which the shoe management service using the O2O-based delivery agency platform is implemented according to an embodiment of the present disclosure.
FIG. 4 is a diagram illustrating a process in which data is transmitted/received between components included in the system for providing a shoe management service using an O2O-based delivery agency platform in FIG. 1, according to an embodiment of the present disclosure.
FIG. 5 is a flowchart illustrating a method of providing a shoe management service using an O2O-based delivery agency platform, according to an embodiment of the present disclosure.

### [Best Mode]

As a technical means for solving the above-described technical problems, a system for providing a shoe management service using an O2O-based delivery agency platform according to an embodiment of the present disclosure includes a user terminal that transmits a shoe management request event, and receives and outputs shoe collection time and shoe delivery time, at least one affiliated store terminal that sets the shoe collection time and the shoe delivery time for each location or region, and registers at least one staff terminal, and a shoe management service providing server including a receiving unit that receives the shoe management request event from the user terminal, a selection unit that filters at least one affiliated store terminal on the basis of a real-time location or inputted address of the user terminal, and a distribution unit that transmits the shoe management request event to the filtered affiliated store terminal.

### [Mode]

Hereinafter, embodiments of the present disclosure will be described in detail with reference to the accompanying drawings, so that those with ordinary skill in art to which the present disclosure pertains may easily carry out the embodiments of the present disclosure. The present disclosure may, however, be embodied in different forms and is not limited to the embodiments set forth herein. Moreover, in order to clearly explain the present disclosure, configurations irrelevant to the discription of the present disclosure may be omitted from the drawings. Throughout the specification, like reference numerals refer to like parts.

Through the specification, it will be understood that when an element is referred to as being "connected to" or "coupled to" another element, the element may be directly connected to or coupled to the another element, or electrically connected to or coupled to the another element with one or more elements interposed therebetween. In addition, it will also be understood that the terms "comprises," "comprising," "includes," and "including" when used in this specification do not preclude the presence of one or more other elements, but may further include or have the one or more other elements, unless otherwise mentioned. It should be understood that the existence or addition of one or more other features or numbers, steps, operations, components, parts or combinations thereof, is not precluded in advance.

The terms of extent "approximately", "substantially", etc. used throughout the specification are used in or close to the numerical value when manufacture and material tolerances inherent in the stated meaning are presented, and are used to prevent an unconscionable infringer from unfairly using the disclosure in which exact or absolute numerical values are mentioned to help the understanding of the present disclosure. As used throughout the specification of the present disclosure, the term "step to" or "step of' does not mean "step for".

In this specification, the term "part" includes a unit realized by hardware, a unit realized by software, and a unit realized using both of the hardware and the software. In addition, one unit may be implemented using two or more pieces of hardware, and two or more units may be implemented by one hardware.

In this specification, some of the operations or functions described as being performed by a terminal, an apparatus or a device may be performed by a server connected to the terminal, apparatus or device. Similarly, some of the operations or functions described as being performed by a server may also be performed by a terminal, an apparatus or a device connected to the server.

In this specification, some of the operations or functions described as mapping or matching with a terminal may be interpreted as mapping or matching with the terminal's unique number or personal identification information, which is identifying data of the terminal.

Hereinafter, the present disclosure is described in detail with reference to the accompanying drawings.

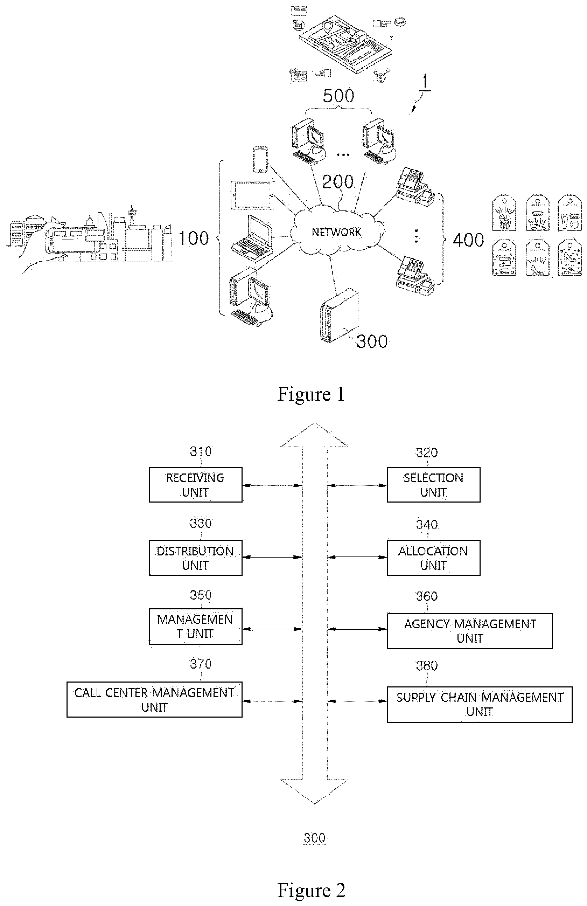

FIG. 1 is a diagram illustrating a system 1 for providing a shoe management service using an O2O-based delivery agency platform, according to an embodiment of the present disclosure. Referring to FIG. 1, the system 1 for providing a shoe management service using an O2O-based delivery agency platform may include at least one user terminal 100, a shoe management service providing server 300, at least one affiliated store terminal 400 and at least one delivery agency terminal 500. Since the system 1 for providing a shoe management service using an O2O-based delivery agency platform, illustrated in FIG. 1, is merely an embodiment of the present disclosure, the present disclosure is not limitedly interpreted through FIG. 1.

Each component of FIG. 1 is generally connected through a network 200. For example, as illustrated in FIG. 1, the user terminal 100 may be connected to the shoe management service providing server 300 through the network 200. The shoe management service providing server 300 may be connected to the user terminal 100, the affiliated store terminal 400 and the delivery agency terminal 500 through the network 200. The affiliated store terminal 400 may be connected to the shoe management service providing server 300 through the network 200. The delivery agency terminal 500 may be connected to the user terminal 100, the shoe management service providing server 300 and the affiliated store terminal 400 through the network 200.

The network 200 refers to a connection structure which makes it possible to exchange information between nodes, such as a plurality of terminals and servers, and an example of the network 200 includes RF, a 3^{rd} generation partnership project (3GPP) network, a long term evolution (LTE) network, a 5^{th} generation partnership project (5GPP) network, a world interoperability for microwave access (WIMAX) network, Internet, a local area network (LAN), a wireless LAN, a wide area network (WAN), a personal area network (PAN), a bluetooth network, an NFC network, a satellite broadcast network, an analog broadcast network and a digital multimedia broadcasting (DMB) network, but the present disclosure is not limited thereto.

In the following, the term "at least one" is defined as a term including singular and plural forms, and even if the term "at least one" does not exist, each component may be singular or plural in number, and mean the singular or plural. In addition, that each component is provided in singular or plural may be changed according to embodiments.

The user terminal 100 may be a terminal of a customer who requests shoe management by using a web page, an application page, a program or an application related to the shoe management service using the O2O-based delivery agency platform. In this case, since the shoe management service is not limited to the shoe management, and may include at least one business, the user terminal 100 may be a terminal of a customer requesting food order, document delivery, flower delivery and the like. In addition, the user terminal 100 may be a terminal that receives a schedule of shoe collection and delivery when requesting the shoe management. Moreover, the user terminal 100 may be a terminal that pays a fee on a regular basis or pays a one-time fee.

The user terminal 100 may be implemented as a computer capable of accessing a remote server or terminal through the network 200. Examples of the computer may include a navigation, a laptop computer equipped with a web browser and a desktop computer. The user terminal 100 may be implemented as a terminal capable of accessing a remote server or terminal through the network 200. Examples of the user terminal 100 may include, as wireless communication devices that ensure portability and mobility, all kinds of handheld-based wireless communication devices such as a navigation, a personal communication system (PCS), a global system for mobile communications (GSM), a personal digital cellular (PDC), a personal handyphone system (PHS), a personal digital assistant (PDA), international mobile telecommunication (IMT)-2000, code division multiple access (CDMA)-2000, w-code division multiple access (W-CDMA), a wireless broadband internet (WIBRO) terminal, a smartphone, a smartpad and a tablet PC.

The shoe management service providing server 300 may be a server that provides the web page, the application page, the program or the application related to the shoe management service using the O2O-based delivery agency platform. The shoe management service providing server 300 may be a server that receives an affiliated store application from the affiliated store terminal 400 and registers the affiliated store. The shoe management service providing server 300 may be a server that registers the delivery agency terminal 500, receives a price policy for each location and area, and converts the price policy into a database. The shoe management service providing server 300 may be a server that receives a collection and delivery schedule for each location from the affiliated store terminal 400, and converts the collection and delivery schedule into a database. When the shoe management service providing server 300 receives a shoe management request event from the user terminal 100, the shoe management service providing server 300 may be a server that extracts the affiliated store terminal 400 on the basis of a real-time location or address of the user terminal 100 or an input keyword, and transmits the user's shoe management request event to the extracted affiliated store terminal 400. The shoe management service providing server 300 may be a server that, when the affiliated store terminal 400 distributes a task to a staff terminal (not illustrated) and the staff terminal scans a shoe QR code after the shoe management request is allocated to the affiliated store, maps the shoe QR code with a user QR code, stores the mapped code, and manages a process. The shoe management service providing server 300 may be a server that flexibly adjusts supply according to demand by using a supply chain management algorithm.

The shoe management service providing server 300 may be implemented as a computer capable of accessing a remote server or terminal through the network 200. Examples of the computer may include a navigation, a laptop equipped with a web browser and a desktop.

The affiliated store terminal 400 may be a terminal of an affiliated store using the web page, the application page, the program or the application related to the shoe management service using the O2O-based delivery agency platform. In an embodiment of the present disclosure, although the shoe management is described as an example, as described above, various types of business such as flower delivery, restaurants and coffee shops are not excluded. The affiliated store terminal 400 may be a terminal that applies for and registers for an affiliated store with the shoe management service providing server 300, and to which a shoe management request event received from the shoe management service providing server 300 is allocated. Alternatively, even when the shoe management request event is directly allocated to the affiliated store terminal 400 by the user terminal 100, the affiliated store terminal 400 may be a terminal that requests delivery by accessing the shoe management service providing server 300 in order to use the delivery agency.

The affiliated store terminal 400 may be implemented as a computer capable of accessing a remote server or terminal through the network 200. Examples of the computer may include a navigation, a laptop computer equipped with a web browser and a desktop computer. The affiliated store terminal 400 may be implemented as a terminal capable of accessing a remote server or terminal through the network 200. Examples of the affiliated store terminal 400 may include, as wireless communication devices that ensure portability and mobility, all kinds of handheld-based wireless communication devices such as a navigation, a personal communication system (PCS), a global system for mobile communications (GSM), a personal digital cellular (PDC), a personal handyphone system (PHS), a personal digital assistant (PDA), international mobile telecommunication (IMT)-2000, code division multiple access (CDMA)-2000, w-code division multiple access (W-CDMA), a wireless broadband internet (WIBRO) terminal, a smartphone, a smartpad and a tablet PC.

The delivery agency terminal 500 may be a terminal of a delivery agency or agency staff who completes collection and delivery by using the web page, the application page, the program or the application related to the shoe management service using the O2O-based delivery agency platform. When the delivery agency terminal 500 receives the collection and delivery request from the shoe management service providing server 300, the delivery agency terminal 500 may be a terminal that outputs the location of the user terminal 100 and the location of the affiliated store terminal 400, and generates a route from a current location to the location of the user and then to the affiliated store.

The delivery agency terminal 500 may be implemented as a computer capable of accessing a remote server or terminal through the network 200. Examples of the computer may include a navigation, a laptop computer equipped with a web browser and a desktop computer. The delivery agency terminal 500 may be implemented as a terminal capable of accessing a remote server or terminal through the network 200. Examples of the delivery agency terminal 500 may include as wireless communication devices that ensure portability and mobility, all kinds of handheld-based wireless communication devices such as a navigation, a personal communication system (PCS), a global system for mobile communications (GSM), a personal digital cellular (PDC), a personal handyphone system (PHS), a personal digital assistant (PDA), international mobile telecommunication (IMT)-2000, code division multiple access (CDMA)-2000, w-code division multiple access (W-CDMA), a wireless broadband internet (WIBRO) terminal, a smartphone, a smartpad and a tablet PC.

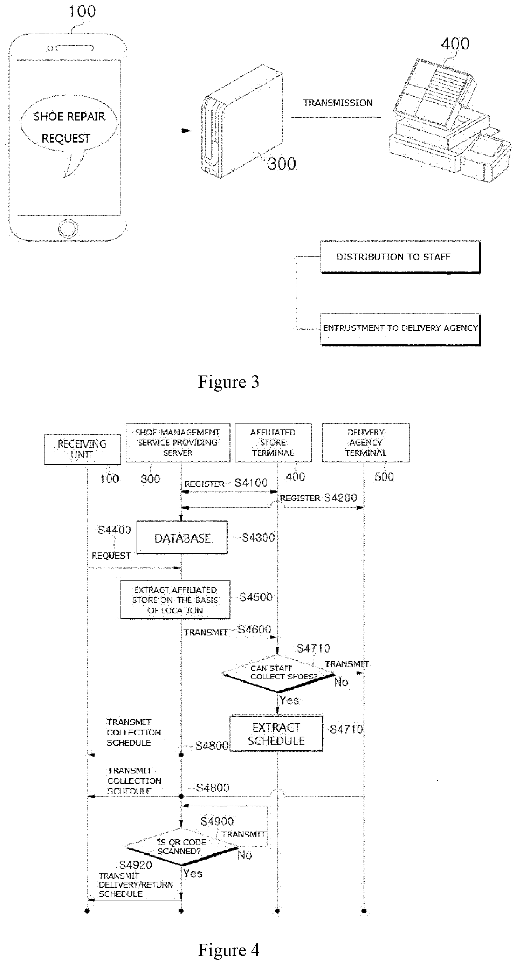

FIG. 2 is a block diagram illustrating the shoe management service providing server 300 included in the system 1 of FIG. 1, and FIG. 3 is a diagram illustrating an example in which the shoe management service using the O2O-based delivery agency platform is implemented according to an embodiment of the present disclosure.

Referring to FIG. 2, the shoe management service providing server 300 may include a receiving unit 310, a selection unit 320, a distribution unit 330, an allocation unit 340, a management unit 350, an agency management unit 360, a call center management unit 370 and a supply chain management unit 380.

When the shoe management service providing server 300 according to the embodiment of the present disclosure or another server (not illustrated) operating in conjunction therewith transmits the application, the program, the application page, or the web page related to the shoe management service using the O2O-based delivery agency platform to the user terminal 100, the affiliated store terminal 400 and the delivery agency terminal 500, the user terminal 100, the affiliated store terminal 400 and the delivery agency terminal 500 may install or open the application, the program, the application page or the web page related to the shoe management service using the O2O-based delivery agency platform. In addition, a service program may be driven in the user terminal 100, the affiliated store terminal 400 and the delivery agency terminal 500 by using a script executed in a web browser. The web browser, which is a program that enables the use of web (WWW: world wide web) service, refers to a program that receives and displays hypertext written in hypertext mark-up language (HTML). Examples of the web browser include Netscape, Explorer and Chrome. The application refers to an application program on a terminal. Examples of the application include an application running on a mobile terminal or a smartphone.

Referring to FIG. 2, the receiving unit 310 may receive the shoe management request event from the user terminal 100. At this time, the user terminal 100 may transmit the shoe management request event. The receiving unit 310 may access the platform of the present disclosure through three channels, i.e., a call center, an O2O service and a chatbot. Since the chatbot often does not have common sense or knowledge, in many cases, the chatbot correctly answers a question only when the question is made in a natural language that a machine can understand. There is a case in which ordinary people who do not understand such an operation process well feel that the chatbot is stuffy and make a call to the call center. To this end, the receiving unit 310 may operate based on a real-time big data analysis and prediction system in order to efficiently process and analyze data. The real-time big data analysis and prediction system, which is a system capable of real-time data collection, event detection, route analysis, and sentiment analysis and prediction, may use an auto-expanding knowledge graph as base data. The auto-expanding knowledge graph may automatically expand the knowledge graph by collecting and analyzing a new data source in real time, and the chatbot may be composed of a knowledge graph layer and a chatbot layer. The knowledge graph layer continuously collects new data through Twitter and news, and extracts a new relationship on the basis of a BERT model, so as to automatically extend the existing knowledge graph. As the extracted relationship is linked to the knowledge graph, the auto-expanding knowledge graph may be established. The chatbot layer may be configured to understand a user's question intention and show the results on the basis of the knowledge graph.

At this time, the auto-expanding knowledge graph using BERT represents knowledge linked to a relationship between words and sentences as a graph. Because the graph contains the relation of knowledge, it is useful for a computer to learn human common sense, and a data source to be analyzed may be automatically expanded. Data such as news and social media are collected in real time, the collected data are analyzed, and then a relationship between words is extracted. It is checked whether the extracted word and relationship pair exists in the existing knowledge graph, and when the extracted word and relationship pair does not exist, the extracted word and relationship pair may be added to the graph, and thus the graph may be automatically expanded. The BERT, which has previously learned pre-built data and has been released as a general language model, may be fine-tuned using learning data according to a task to be performed. Therefore, by using the BERT, it is possible to fine-tune a model to extract a relationship between entities which are keywords. When a sentence is inputted as an input value to the BERT model for training a relationship extraction model, the subject and the object may be connected after the entire sentence. The subject and the object may be connected as a single sentence, and the single sentence may be inputted to the BERT model, and a final output, that is, a label, may be a relationship. The relationship extraction model that has been trained and verified in this way may be used to extract a relationship for a new sentence. In such a way that the relationship extracted finally in this way is connected to a node that matches a pre-established knowledge graph, knowledge may be expanded.

It is important for the chatbot to process a human natural language to understand and respond to the intention thereof. The chatbot system is mainly composed of a module for recognizing a natural language such as human speech and text, a module for understanding intention and a module for re-creating an answer according to the intention into a natural language. Although a number of modules and models are actually required to establish the chatbot system from beginning to end, a part using the auto-expanding knowledge graph is mainly described in the embodiment of the present disclosure. When the chatbot recognizes a question, identify the intention and sets an object under the assumption that the chatbot basically includes a natural language recognition module and a natural language processing module, the chatbot has to set a word, which is not a question object and a relation object in a sentence, as a keyword to be searched in the knowledge graph. In addition, the chatbot searches for the keyword and relationship, and displays the results to the user. Since various results may be obtained for a single keyword and relationship, the chatbot displays the results of the upper list in a graph, not simply in sentences, which makes it possible for people to obtain knowledge more intuitively.

The selection unit 320 may filter the affiliated store terminal 400 on the basis of the real-time location or the inputted address of the user terminal 100. To this end, the affiliated store terminal 400 may set shoe collection time and shoe delivery time for each location or region, and register at least one staff terminal. An area of the affiliated store may be determined according to the collection and delivery route of shoes. For example, when a shoe repair shop A collects and delivers shoes on a B-C-E line, a location of the B-C-E line may be allocated to the shoe repair shop A. In this case, contention between shoe repair shops having the same line may occur. In order to evenly distribute the number of calls or orders, the number of calls, quota and current progress for each shoe repair shop may be considered. For example, in the problem of allocating a person in charge, an appropriate manpower has to be allocated to evenly distribute the number of orders, and a task load of each shoe repair shop has to be equal. The load in the position of the person in charge may be regarded as the task load, such as the weight or number of each pair of shoes, time to be taken and a distance to be moved. Accordingly, the problem of allocating the person in charge in the present disclosure results in a traveling salesman problem (TSP) and a regional partitioning problem. Herein, the TSP is a problem belonging to an NPHard problem, and a problem in that movement time and cost between all districts exist and a minimum cost or minimum time required to return after visiting all the districts is calculated. The TSP may be divided into a problem with a symmetric distance and a problem with an asymmetric distance. In addition to the method of checking all the cases, simulated annealing, tabu search, genetic algorithm and ant colony optimization methods may be used.

In the embodiment of the present disclosure, the ant colony optimization method is used. In an initial stage of operation, it starts with a random starting point like a general ant colony optimization. An ant colony optimization algorithm starts with the random starting point, and the ant colony optimization algorithm finds an optimal value. At this time, the ant colony optimization algorithm converges to a constant value when the optimal value is found. Herein, the general ant colony optimization algorithm might not check whether the optimal value is a global optimal value or a local optimal value. When a mutation proceeds through a certain probability, the mutation selects a number from a route obtained from the ant colony optimization algorithm, and gives a transformation to the number. The route generated through the mutation is applied to the ant colony optimization algorithm once again, and is compared with an existing route. At this time, a value obtained through the mutation suggests a completely new route. For this reason, when the value obtained through the mutation converges to the local optimal value, there is an opportunity to converge to the global optimal value through the mutation. Various methods other than the above-described method may be used, and it is of course possible that the number of calls is not evenly distributed in a free competitive market.

The distribution unit 330 may transmit the shoe management request event to the affiliated store terminal 400 which is filtered. When the affiliated store terminal 400 is designated, the user terminal 100 may receive and output the shoe collection time and the shoe delivery time. When the location is deviated from a circulation route or when collection is requested after collection or delivery has already been completed, the shoe collection time and the shoe delivery time may be calculated and provided in real time.

When the affiliated store terminal 400 allocates the shoe management request event to any one of one or more staff terminals, the allocation unit 340 may transmit pre-set shoe collection time and information of the staff terminal to the user terminal 100. In case the user is away or in conference, the user terminal 100 may photograph the shoes to be repaired with a camera, and transmit it in a photo format to the staff terminal.

When a shoe collection event occurs in the staff terminal interlocked with the affiliated store terminal 400, the management unit 350 may transmit pre-set delivery time to the user terminal 100. At this time, collection refers to picking shoes up, and delivery is defined as returning shoes that have been repaired or managed. In most cases, it is common to deliver shoes according to the user's work closing hour, but the management unit 350 may further store special requests for delivery at the time requested by the user terminal 100 in special cases. When a shoe QR code is scanned by the staff terminal, the management unit 350 may map a user QR code included in the shoe collection event with the shoe QR code and store the mapped code. For example, when shoes are collected in a building with many office workers, there may be a case where the request or the owner is confused because the shoes are similar in shape or color. Therefore, a shoe QR code may be used to distinguish shoes, a user QR code may be used to distinguish customers, and collection and delivery locations of each shoe, various requests and special items are further mapped, stored and managed. The present disclosure is applicable to apartments, hotels, catering establishments, coffee shops and the like as well as buildings, but it is obvious that, in method and system patents, the application field thereof is not limited to the listed ones because it is not an element of the use invention.

The agency management unit 360 may accept registration of the delivery agency terminal 500, and manage the registered delivery agency terminal 500. When the schedule of the staff terminal interlocked with the affiliated store terminal 400 does not satisfy the schedule included in the shoe management request event, the agency management unit 360 may transmit and allocate the shoe management request event to the delivery agency terminal 500.

When a call is received from the user terminal 100, the call center management unit 370 may transmit user information, which is previously mapped with the user terminal 100 and stored, to a call center terminal and display the user information. In this case, the call center management unit 370 may further use a method of optimally arranging manpower in addition to transmitting customer information in real time. Recently, a call center tends to reduce the number of staff due to the O2O service or chatbot channels. However, when there are people who cannot use mobile devices or the chatbot is unable to answer queries with data built with manuals, it is still necessary to consult with staff who is a human. In this case, in order to efficiently respond to inbound calls with a limited number of staff without increasing the load on the call center staff, the call center basically uses an M/M/s queue model, an M/M/s/B queue model considering the situation in which all the staff is on call and cannot be connected, and a model defined as an M/M/s+M queue, which accounts for the case in which customers wait and give up. When the number of responding staff is limited, queues and abandoned calls inevitably occur in the situation where it is difficult to predict an arrival rate of inbound calls, and therefore, the abandoned calls, a blocking situation in which a customer does not even enter the queues and a case in which a customer gives up and tries again may be considered. Considering a model that includes the concept of revenue and cost in the issue of queue length or waiting time, the number of customers and schedules may be optimized from a model including revenue per call completed, cost loss for abandoned calls and costs incurred in the number of staff and the number of used phone lines in the queue model. In addition, dynamic staffing in which a near future call center situation is predicted based on a call center situation and a current operation situation and manpower is arranged to respond to all inbound calls may be used, and it is possible to simultaneously achieve appropriate staffing and call distribution on the basis of a call routing algorithm for effective arrangement of staff in the call center.

The supply chain management unit 380 may manage supply and demand by using a supply chain management algorithm. Cooperative supply chain management is a concept that emerged as roles such as collaboration and relationship satisfaction between companies participating in a supply chain are emphasized, and is an organic system with continuity beyond a one-time relationship that cooperates only for a short period or a project period. A cooperative transaction relationship is a relationship in which two independent buyer and supplier depend on each other and pursue mutual interests. In the cooperative transaction relationship, a company that operates by establishing a cooperative relationship with other companies may achieve greater performance than a company that operates independently. It is based on business case studies and research results in that resolving an allocation problem in the supply chain through cooperation may obtain higher outcomes than independently planning and executing the allocation problem. In this case, a heuristic branching limit method may be used, and it is possible to verify and model the optimal solution by comparing the heuristic branching limit method with a meta-heuristic algorithm such as a genetic algorithm, ant colony optimization (ACO) and simulated annealing (SA).

In addition, the service according to the embodiment of the present disclosure may further use a method of delivery to the inside of a building by using an automatic guided vehicle (AGV). The AGV refers to a vehicle that autonomously travels along a pre-set route. Since the collection and delivery of shoes has to be made for each building, and the structure or arrangement of each floor is the same, the following method may be applied to the service according to an embodiment of the present disclosure. The method is that the AGV equipped with a delivery item, i.e., shoes, communicates with a smartphone through a Bluetooth sensor, guides a route on an attached line by using an infrared sensor, and delivers the item.

In the case of a vehicle that can obtain information about the surrounding environment, obstacles may be detected using an ultrasonic sensor, a direction of the vehicle may be adjusted through serial wireless communication, and the vehicle may be controlled only with an Arduino board, serial communication and a sensor. In the case of delivery in a limited indoor environment by using the AGV, the AGV may receive an input from a user, detect a location in a limited indoor space by using Wi-Fi and an ultrasonic sensor, automatically set a route, and deliver goods to the user. The accuracy of the method of receiving the input of the user and delivering the goods in an indoor space may be further improved by adding a method of setting the route by using an infrared sensor, Wi-Fi and a current location of the AGV. In this case, users may attach landmarks on the ground in advance, and the AGV equipped with an infrared camera may determine and recognize the landmark through the infrared camera, and follow the route.

For example, when a shoe repair request is sent from the user terminal 100, and the shoe management service providing server 300 allocates the shoe repair request to the affiliated store terminal 400, the affiliated store terminal 400 inputs the corresponding building and the number of floors to the AGV, and the user terminal 100 inputs its own location indoors. The AGV may set a destination on the basis of data inputted from the affiliated store terminal 400 and the user terminal 100, calculate a route according to the set destination, and adjust delay time while using information on the number of collection and delivery along the route. The AGV may communicate with the user terminal 100 through a Bluetooth sensor or Wi-Fi. In addition, although the AGV may move along a line through an infrared sensor, a case is not excluded, in which the AGV moves while detecting a surrounding object with a lidar or radar sensor and drawing a map in real time. The infrared sensor is a sensor used to detect an object or send a signal by using infrared rays, which have a wavelength of 780 nm to 1 mm that humans cannot see. When the infrared sensor including an infrared LED and an analog to digital converter (ADC) is used, it does not harm the aesthetics or disturb people because the infrared rays cannot be seen by humans, but the AGV may find a route through the infrared sensor. In addition, when the infrared rays emitted from the LED is reflected on the ground and the line, the sensor detects the intensity of the infrared rays, and the ADC calculates the intensity of the infrared rays and simplifies it into dark (0) and bright (1). On the basis of this process, the AGV may detect the line.

In the case of using this process, when the affiliated store terminal 400 inputs the number and locations of customers per building, the AGV may select a route on the basis of the number of customers of each destination so as not to go through a destination to which the customer is not assigned, and set the direction at the fork in the road. Afterwards, the AGV may use the infrared sensor to follow the line and move according to the selected route. When arriving at the destination to which the customer is assigned, the AGV may wait for a certain amount of time, and wait for the customer to receive or provide shoes. When the customer receives or provides the shoes, the user terminal 100 may connect the AGV with a Bluetooth, and transmit whether or not to receive the shoes to the AGV. The AGV may store the number of time that the user or customer receives shoes, count the number of shoes that are not received at the end of the selected route, wait for a time proportional to the number of times that the user or customer does not receive shoes, and provide an opportunity for those who have not yet received the shoes to receive them again. After this waiting time has elapsed, the AGV may return to the starting point, and receive a new order.

The AGV may prepare for a new input by emptying an input buffer when Bluetooth communication is connected with any application through a universal asynchronous serial receiver and transmitter (UART) PORT. When an input is received from the affiliated store terminal 400, the corresponding input value may be regarded as a reception factor corresponding to each destination, and based on this, a route may be selected so as to go through only the destination where the customer exists. When the route selection is completed, the infrared sensor on a front lower part of the AGV may be initialized for route tracking. The infrared sensor may detect the line attached to the ground by distinguishing light and dark, and the AGV may track the route by changing a direction so that the detected line is always recognized by a center sensor. When reaching a fork in the road, the AGV may move forward/right/left/reverse along the selected route. When reaching the destination, the AGV may wait for a certain delay time, and when receiving a reception acknowledgment code from the user terminal 100, the AGV may reduce the reception factor of the corresponding destination. When all destinations and all selected routes are passed, the AGV adds up reception factors of each destination at the present time. When the total number of reception factors is greater than 0, the AGV waits for an additional delay time in proportion to the total number of reception factors, and returns to the starting point. When the total number of reception factors is 0, the AGV may return to the starting point without waiting, and wait for a new input from the affiliated store terminal 400.

The shoe management service providing server 300 according to the embodiment of the present disclosure may further provide a customer management service by using big data and artificial intelligence. In this case, the shoe management service providing server 300 may use customer segmentation and a self-organizing map (SOM). The former, the customer segmentation, refers to classifying customers with similar characteristics into a small number of groups by using various variables of a single customer view. The customer segmentation, which is a core marketing process, is the basis for resource allocation and performance evaluation within a company, and provides an opportunity to improve corporate competitiveness in the long run. In addition, the customer segmentation enables appropriate responses and suggestions to customers, and enables effective targeting to select key customer groups for specific marketing activities of the company. Therefore, for effective segmentation, it is very important to select a reference variable well in the analysis. Criteria for segmentation include accessibility, homogeneity within a group, heterogeneity between groups, and a sufficient size of a group (substantial). Clustering refers to an operation of collecting given items with similar characteristics. That is, the clustering is an operation of grouping a set of objects so that objects in the same group are more similar than objects in other groups. Classification is also an operation of classifying items with similar characteristics. The difference between clustering and classification is that in the classification, the category to be divided is predetermined, whereas in the clustering, the category to be divided is not predetermined. The clustering is mainly used when segmenting customers because it is not known in advance what types of customers there will be many when dividing customers by specific criteria. The clustering is divided into hierarchical clustering and non-hierarchical clustering, and the difference therebetween lies in the size of data. In the embodiment of the present disclosure, the non-hierarchical clustering with no limitation on the size of data may be used, but the use of the hierarchical clustering is not excluded. Among the non-hierarchical clustering, a self-organizing map (SOM) method, which has a learning methodology of an artificial neural network method and enables more in-depth clustering, may be used. At this time, the SOM is a kind of unsupervised learning artificial neural network model that models the sciatic cortex among the cerebral cortex of the human brain. The SOM is an algorithm that derives clusters through learning so that each object of high-dimensional data corresponds to a two-dimensional or three-dimensional grid visible to human eyes. Similar objects in a high-dimensional data source space may be connected to grids adjacent to low dimension, and the similarity in the low-dimensional grid may be learned to preserve the similarity in a high-dimensional input space as much as possible. The SOM is useful for converting high-dimensional data into low-dimensional data, and has characteristics of clustering and visualization. In addition, the SOM has the advantage that continuous learning is possible because it has a learning methodology of artificial neural network techniques, and it adapts well to changes even when the distribution of input data changes over time. Accordingly, since the SOM enables micro-level detailed customer segmentation and visualization possible, and may identify potential similar customers through a density plot using multiple variables, the SOM may be usefully used for customer segmentation in the shoe repair and laundry fields. Of course, it is obvious that various methods may be used in addition to the big data and artificial intelligence algorithms described above, and the present disclosure is not limited to the above-described embodiment.

The shoe management service according to the embodiment of the present disclosure may contribute to the creation of unique customer service by removing bacteria from shoes, which have more bacteria than bathrooms, by performing LED disinfection, steam disinfection, air freshener spraying, etc., after shoe repair and cleaning.

Hereinafter, an operation process according to the configuration of the shoe management service providing server 300 of FIG. 2 is described in detail with reference to FIG. 3 as an example. However, it is obvious that the embodiment of the present disclosure is merely one of various embodiments of the present disclosure, and is not limited thereto.

Referring to FIG. 3, (A) when the shoe management service providing server 300 receives a shoe management request from the user terminal 100, the shoe management service providing server 300 transmits the shoe management request to the affiliated store terminal 400, and the affiliated store terminal 400 proceeds with the process of collection, management and delivery through its own staff or delivery agency. (B) The shoe management service providing server 300 shares the schedule of collection and delivery with the user terminal 100, and (C) when the process of shoe management is completed after the delivery is collected, (D) the shoe management service providing server 300 may deliver the shoes whose management is completed to the user again.

Since matters that have not been described with respect to the method of providing a shoe management service using an O2O-based delivery agency platform in FIGS. 2 and 3 are the same as the contents described with respect to the method of providing a shoe management service using an O2O-based delivery agency platform in FIG. 1 or may be easily inferred from the described contents, a detailed description thereof is omitted.

FIG. 4 is a diagram illustrating a process in which data is transmitted/received between components included in the system 1 for providing the shoe management service using the O2O-based delivery agency platform of FIG. 1, according to an embodiment of the present disclosure. Hereinafter, an example of the process in which data is transmitted/received between components is described with reference to FIG. 4, but the present disclosure is not limited to the embodiment, and it is apparent to those skilled in the art that the process in which the data is transmitted/received, which is illustrated in FIG. 4, may be changed according to various embodiments described above,.

Referring to FIG. 4, the shoe management service providing server 300 registers the affiliated store terminal 400 and the delivery agency terminal 500 in step S4100 and S4200, and builds a database in step S4300. When a request is received from the user terminal 100 in step S4400, the shoe management service providing server 300 extracts an affiliated store on the basis of the location of the user terminal 100 in step S4500, and transmits the user's request to the extracted affiliated store terminal 400 in step S4600. When staff is able to collect shoes in step S4700, the affiliated store terminal 400 extracts a collection schedule of the corresponding location of the staff s4710, and transmits the collection schedule to the user terminal 100 s4800, and when the staff is unable to collect shoes in step S4700, the affiliated store terminal 400 transmits the user's request to the delivery agency terminal 500, and allow the delivery agency terminal 500 to input a collection schedule. The shoe management service providing server 300 may transmit a delivery schedule, that is, a return schedule, to the user terminal 100 in step S4920 when a QR code is scanned by the staff terminal or the delivery terminal, and the collection is identified in step S4900.

The order of the above-described steps S4100 to S4920 is merely an example, and the present disclosure is not limited thereto. The order of the above-described steps S4100 to S4920 may be mutually changed, and some of these steps may be executed simultaneously or omitted.

Since matters that have not been described with respect to the method of providing a shoe management service using an O2O-based delivery agency platform in FIG. 4 are the same as the contents described with respect to the method of providing a shoe management service using an O2O-based delivery agency platform in FIGS. 1 to 3 or may be easily inferred from the described contents, a detailed description thereof is omitted.

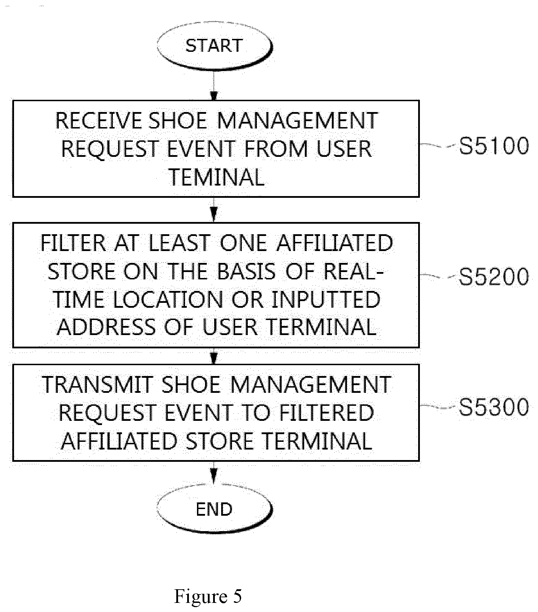

FIG. 5 is a flowchart illustrating a method of providing a shoe management service using an O2O-based delivery agency platform, according to an embodiment of the present disclosure. Referring to FIG. 5, the shoe management service providing server receives a shoe management request event from the user terminal in step S5100, and filters at least one affiliated store terminal on the basis of a real-time location or an input address of the user terminal in step S5200. The shoe management service providing server transmits the shoe management request event to the filtered affiliated store terminal in step S5300.

Since matters that have not been described with respect to the method of providing a shoe management service using an O2O-based delivery agency platform in FIG. 5 are the same as the contents described with respect to the method of providing a shoe management service using an O2O-based delivery agency platform in FIGS. 1 to 4 or may be easily inferred from the described contents, a detailed description thereof is omitted.

The method of providing a shoe management service using an O2O-based delivery agency platform according to the embodiment described with reference to FIG. 5 may be implemented in the form of a recording medium including instructions executable by a computer, such as an application or program module executed by a computer. Computer-readable media may be any available media that can be accessed by a computer, and examples thereof include all volatile, non-volatile media, separable and non-separable media. In addition, computer-readable media may include all computer storage media. Examples of computer storage media include all volatile, non-volatile media, separable and non-separable media implemented in any method or technology for storage of information such as computer readable instructions, data structures, program modules or other data.

The method of providing a shoe management service using an O2O-based delivery agency platform according to an embodiment of the present disclosure described above may be executed by an application basically installed in a terminal (which may include a program included in a platform or operating system basically installed in the terminal), and may be executed by an application, i.e., a program, installed directly in a master terminal by the user through an application store server, an application or an application providing server such as a web server related to a corresponding service. In this sense, the method of providing a shoe management service using an O2O-based delivery agency platform according to an embodiment of the present disclosure described above may be implemented as an application basically installed in a terminal or an application, i.e., a program, installed directly by the user, and be recorded on computer-readable recording media such as a terminal.

Various embodiments of the present disclosure have been described for illustrative purposes, and those skilled in the art to which the present disclosure pertains may understand that the present disclosure may be carried out in other specific forms without changing its technical spirit or essential features. Therefore, it should be understood that the embodiments described above are illustrative in all respects, not limitative. For example, each component described as a single type may be implemented in a dispersed form, and likewise, components described as being dispersed may also be implemented in a combined form.

The scope of the present disclosure is defined by the claims to be described below rather than the above detailed description, and it should be construed that the meaning and scope of the claims and all changes or modified forms derived from the equivalent concept thereof are included in the scope of the present disclosure.

## Claims

1. A system for providing a shoe management service using an O2O-based delivery agency platform executed in a shoe management providing server, the system comprising:
a user terminal that transmits a shoe management request event, and receives and outputs shoe collection time and shoe delivery time;
at least one affiliated store terminal that sets the shoe collection time and the shoe delivery time for each location or region, and registers at least one staff terminal; and
the shoe management service providing server including a receiving unit that receives the shoe management request event from the user terminal, a selection unit that filters at least one affiliated store terminal on the basis of a real-time location or inputted address of the user terminal, and a distribution unit that transmits the shoe management request event to the filtered affiliated store terminal,
wherein a method of providing a shoe management service is executed in the shoe management service providing server.

2. The system of claim 1, wherein the shoe management service providing server further includes an allocation unit that transmits pre-set shoe collection time and information on any one staff terminal of one or more staff terminals to the user terminal when the affiliated store terminal allocates the shoe management request event to the staff terminal from the affiliated store terminal.

3. The system of claim 1, wherein the shoe management service providing server further includes a management unit that transmits pre-set delivery time to the user terminal when a shoe collection event occurs in the staff terminal interlocked with the affiliated store terminal.

4. The system of claim 3, wherein, when the staff terminal scans a shoe QR code, the management unit maps the shoe QR code with a user QR code included in the shoe collection event, and stores the mapped code.

5. The system of claim 1, wherein the shoe management service providing server further includes an agency management unit that registers and manages at least one delivery agency terminal, and when a schedule of the staff terminal interlocked with the affiliated store terminal does not satisfy a schedule included in the shoe management event, the shoe management event is transmitted and allocated to the at least one delivery agency terminal.

6. The system of claim 1, wherein the shoe management service providing server further includes a call center management unit that transmits and displays user information, which is previously mapped with the user terminal and stored, to a call center terminal when a call is received from the user terminal.

7. The system of claim 1, wherein the shoe management service providing server further includes a supply chain management unit that manages demand and supply with a supply chain management algorithm.
